# EUROPÄISCHE PATENTANMELDUNG

(11) **EP 2 020 422 A1**
(43) Veröffentlichungstag der Anmeldung: **04.02.2009**
(21) Anmeldenummer: 07113540.4
(22) Anmeldetag: 31.07.2007
(51) Int. Cl.: C08F 220/06, C04B 40/00

(54) **Emulgierende Polymere und deren Verwendung**

(71) Anmelder: Sika Technology AG, 6340 Baar (CH)
(72) Erfinder: Sulser, Ueli, 8103, Unterengstringen (CH); Krapf, Anna, 8142, Uitikon Waldegg (CH); Velten, Ulf, 8102, Oberengstringen (CH)
(74) Vertreter: Sika Patent Attorneys

(57) **Zusammenfassung**

Die vorliegende Erfindung betrifft emulgierende Polymere, insbesondere die Verwendung dieser Polymere zur stabilen Emulgierung von hydrophoben Zusatzmitteln in wässrigen Betonverflüssigern.

## Beschreibung

### Technisches Gebiet

Die vorliegende Erfindung betrifft emulgierende Polymere, insbesondere die Verwendung dieser Polymere zur stabilen Emulgierung von hydrophoben Zusatzmitteln in wässrigen Betonverflüssigern.

### Stand der Technik

Polymere aus α- β-ungesättigten Carbonsäuren mit Polyalkylenglykol-Seitenketten werden seit längerem in der Betontechnologie als Verflüssiger wegen ihrer starken Wasserreduktion eingesetzt. Diese Polymere haben eine Kammpolymerstruktur und können beim Einarbeiten beträchtliche Mengen an Luft in mineralische Baustoffe einführen, so dass aufgrund der Luftporen im Beton Hohlräume gebildet werden, was zu einer Verschlechterung der mechanischen Eigenschaften und Beständigkeit des Betons führt.

Um den Gehalt an Luftporen im Beton bei der Verwendung von solchen Verflüssigern zu reduzieren, setzt man diese Verflüssiger meist zusammen mit Entlüftern oder Entschäumern ein. Derartige Entschäumer müssen schlecht wasserlöslich bis wasserunlöslich, also hydrophob, sein um eine effektive entschäumende Wirkung entfalten zu können. Wegen der schlechten Wasserlöslichkeit kommt es nach der Einbringung des Entschäumers in den wässrigen Betonverflüssiger über die Zeit zu einer Phasenseparation, die störend bei der Endanwendung des Produktes ist. Mischungen aus Verflüssigern auf Basis von Polycarboxylaten und hydrophobe Entschäumer sind daher nicht ausreichend lagerstabil. Eine Langzeitlagerstabilität ist nicht gegeben. Das Problem wird zur Zeit umgangen, indem z.B. Lagertanks eines entschäumten Produktes gerührt werden.

WO 00/17128 beschreibt eine Mischung aus einem Verflüssiger auf Basis von Polycarboxylaten und butoxylierten Polyalkylenpolyaminen als Entlüfter, welcher bedingt durch den hohen pH ausfällt und so seine entschäumende Wirkung entfaltet. Solche Entschäumer entlüften den Beton allerdings weniger effektiv als hydrophobe Substanzen und müssen in höheren Dosierungen eingesetzt werden, was ökonomisch von Nachteil ist.

Zum Teil werden zur Erzielung von stabilen Mischungen aus wässrigen Polymeren und hydrophoben Entschäumern Tenside zugegeben. So ist beispielsweise aus WO2004/056445A1 ein Tensid mit einer Aminfunktion bekannt, welches den wasserunlöslichen Entschäumer auflöst. Aus US6569924B2 sind Tenside auf der Basis von alkoxylierten, carboxylierten, sulfonierten oder sulfatierten Aliphaten, Sorbitanen, Polypropylenen, Fettsäuren, Fettalkoholen und Isononanolen bekannt. Diese werden ebenso wie Malein/Styrol-Copolymere dafür verwendet, hydrophobe Entschäumer in wässrigen, polymeren Verflüssigern in Form von Micellen zu lösen. Die Micellen werden bei Zugabe in Zementen zerstört und setzen den Entschäumer frei. Die Verwendung von Tensiden zur Lösung von wasserunlöslichen Substanzen in wässrigen Polymerlösungen beinhaltet den Nachteil, dass solche Tenside bei der Anwendung im Beton je nach Art von Zement oder Zuschlägen prinzipiell sowohl entlüftend als auch lufteinführend wirken können. Eine definierte Entschäumung ist so nur mit Aufwand gewährleitstet.

Die bekannten Lösungen zur Herstellung von stabilen Mischungen von wasserunlöslichen Substanzen in wässrigen Polymerlösungen zur Anwendung in hydraulisch abbindenden Systemen sind daher noch verbesserungswürdig. Es besteht das Bedürfnis, stabile Mischungen herstellen zu können, welche über längere Zeit lagerstabil sind.

### Darstellung der Erfindung

Aufgabe der vorliegenden Erfindung ist es daher, eine Zusammensetzung zur Verfügung zu stellen, mit der die Nachteile des Standes der Technik überwunden werden und welche ermöglicht, dass hydrophobe Zusatzmittel zu wässrigen Polymerlösungen gegeben werden können, ohne daß es zu einer Phastentrennung führt. Entsprechend soll eine Langzeitlagerstabilität von hydrophoben Entschäumern in wässerigen Polymerlösungen mit Hilfe der erfindungsgemässen Zusammensetzung erzielt werden.

Überraschenderweise wurde gefunden, dass dies durch ein Polymer **P** gemäss Anspruch 1 erreicht werden kann. Es konnte nun überraschend festgestellt werden, dass die erfindungsgemässen Polymere **P** in der Lage sind, hydrophobe Entschäumer in wässrigen Polycarboxylatverflüssigern lagerstabil zu emulgieren. Zudem führen die erfindungsgemässen **P**olymere P selber zu einer zusätzlichen Wasserreduktion und zu einer verbesserten Verflüssigung der damit hergestellten hydraulisch abbindenden Zusammensetzungen. Somit ermöglicht die Verwendung eines erfindungsgemässen Polymers **P** die Herstellung einer stabilen Mischung aus hydrophoben Entschäumer und wässrigen Polymerlösungen, welche über längere Zeit lagerstabil ist und welche hervorragende verflüssigende Eigenschaften aufweist ohne dass zu viel Luft in die hydraulisch abbindenden Systeme eingebracht wird.

Die Erfindung umfasst zudem die Verwendung der erfindungsgemässen Polymere **P** als Verflüssiger für hydraulisch abbindende Zusammensetzungen sowie als Emulgator für wässrige Zusammensetzungen. Zudem umfasst die Erfindung eine wässrige Zusammensetzung umfassend das erfindungsgemässe Polymer **P**, mindestens einen Entschäumer **M** und mindestens einen Verflüssiger **V**. Weitere vorteilhafte Ausgestaltungen der Erfindung ergeben sich aus den Unteransprüchen.

### Wege zur Ausführung der Erfindung

Die vorliegende Erfindung betrifft ein Polymer **P**, welches erhältlich ist durch Copolymerisation von
(a) mindestens einem ethylenisch ungesättigten Monomer **A**, welches ionische Gruppen umfasst, mit
(b) mindestens einem ethylenisch ungesättigten Monomer **B**, welches hydrophile Oxyalkylengruppen aufweist, und
(c) mindestens einem ethylenisch ungesättigten Monomer **C**, welches Vinylaromate aufweist, und
(d) mindestens einem hydrophoben ethylenisch ungesättigten Monomer **D** der Formel (V); und gegebenenfalls
(e) mindestens einer basischen ethylenisch ungesättigten Aminoverbindung **E**; und gegebenenfalls mit
(f) mindestens einer weiteren mit den Komponenten (a) bis (d) und gegebenenfalls (e) polymerisierbaren Monomer **W**.

Unter "Copolymerisation" versteht man eine Polymerisationsreaktion, vorzugsweise eine radikalische Polymerisation, bei welcher Monomere vorzugsweise in Gegenwart eines Radikalbildners polymerisiert werden. Die radikalische Polymerisation ist ein Standardverfahren, welches dem Fachmann bestens bekannt ist. Als Radikalbildner kommen beispielsweise anorganische oder organische Peroxide, wie beispielsweise Benzoylperoxid, oder Hydroperoxide, Persulfate, Perester oder organische Azoverbindungen in Frage. Die Polymerisation kann auch durch Redox-Initiatoren ausgelöst werden.

Monomer **A** ist ausgewählt aus der Gruppe bestehend aus ungesättigten Mono- oder Dicarbonsäuren oder Analoga von ungesättigten Mono- oder Dicarbonsäuren, ungesättigten Sulfonsäuren oder Analoga von ungesättigten Sulfonsäuren, und ungesättigten Phosphonsäuren oder Analoga von ungesättigten Phosphonsäuren.

Monomer **A** weist insbesondere die Formel (VII) auf.

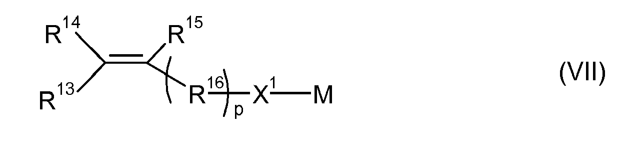

Dabei steht X¹ für CO₂, SO₃ oder PO₃, R¹³ steht für H, CH₃, COOM oder CH₂COOM, insbesondere H, oder R¹³ kann mit X einen Ring bilden zu -CO-O-CO-, R¹⁴ steht für H, ein Alkyl mit 1 bis 5 Kohlenstoffatomen, COOM oder CH₂COOM, insbesondere H, und R¹⁵ steht für H, CH₂COOM oder ein Alkyl mit 1 bis 5 Kohlenstoffatomen, insbesondere H oder CH₃. R¹⁶ steht unabhängig voneinander für eine Phenylengruppe oder eine lineare oder verzweigte Alkylengruppe mit 1 bis 20 Kohlenstoffatomen, welche gegebenenfalls funktionelle Gruppen mit Heteroatomen aufweisen kann, und p bedeutet den Wert 0 oder 1. R¹⁶ kann also entweder, falls p 0 ist, nicht vorhanden sein oder beispielsweise CH₂ bedeuten oder als funktionelle Gruppen eine Amid-, Amin-, Ester-, Ether-, oder Ketongruppe aufweisen.

M bedeutet H, Alkalimetall, Erdalkalimetall, Ammonium, Ammoniumkation, oder Mischungen davon. M kann insbesondere ein Kation, insbesondere H⁺, Na⁺, Ca⁺⁺/2, Mg⁺⁺/2, NH₄⁺ oder ein organisches Ammonium darstellen. Es ist dem Fachmann klar, dass bei den mehrwertigen lonen ein weiteres Gegenion vorhanden sein muss, das unter anderem auch ein Carboxylat desselben oder eines anderen Moleküls des Polymeren P sein kann. Die Ammoniumverbindungen sind insbesondere Tetraalkylammonium oder aber HR₃N⁺, wobei R eine Alkylgruppe insbesondere eine C₁- bis C₆-Alkylgruppe, bevorzugt Ethyl oder Butyl, darstellt. Ammoniumionen werden insbesondere durch die Neutralisation der Carboxylgruppe mit handelsüblichen teritären Aminen erhalten.

Beispiele für geeignete Monomere **A** sind Acrylsäure, Methacrylsäure, Mesaconsäure, Citraconsäure, Glutactonsäure, Fumarsäure, Maleinsäure, Maleaminsäure, Itaconsäure, Vinylbenzoesäure, Crotonsäure, Vinylsulfonsäure, Allylsulfonsäure, Methallylsulfonsäure, 2-Acrylamido-2-methylpropansulfonsäure oder Vinylphosphonsäure, oder Derivate oder Analoga davon, wie beispielsweise das Maleinsäurehalbamid aus Maleinsäure und Sulfanilsäure, insbesondere das N-(4-Sulfophenyl)maleinsäureamid. Besonders bevorzugt sind Monocarbonsäuren. Insbesondere geeignet sind Acrylsäure oder Methacrylsäure, oder Analoga davon.

Das Analogon der ungesättigten Mono- oder Dicarbonsäure, ist beispielsweise ein Säuresalz, Säurehalogenid oder Säureanhydrid. Das Analogon der ungesättigten Sulfonsäure oder Phosphonsäure ist beispielsweise ein Säuresalz.

Die erfindungsgemäss eingesetzte ungesättigte Mono- oder Dicarbonsäure, Sulfonsäure oder Phosphonsäure kann also als freie Säure oder auch als Salz oder Teilsalz vorliegen, wobei der Term "Salz" hier und im folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst.

Monomer **B** umfasst hydrophile Oxyalkylengruppen und weist insbesondere die Formel (I), (II) oder (III) auf:

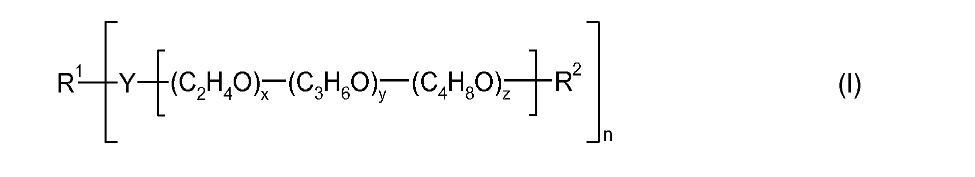

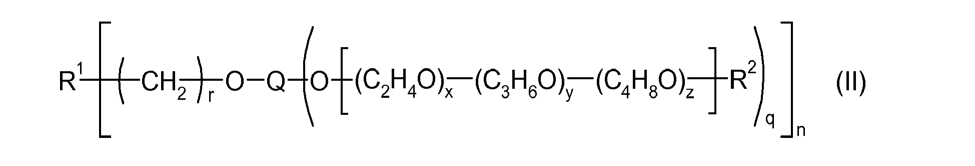

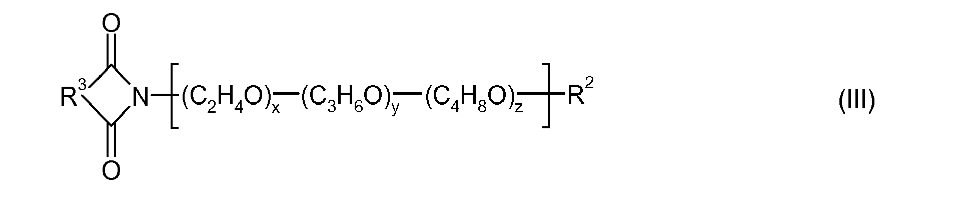

Dabei steht R¹ unabhängig voneinander für eine beim Monomer **A** definierten, insbesondere durch die Formel (VII) abgeleiteten, Mono- oder Dicarbonsäure nach Entfernung von n Carbonsäuregruppen, wobei n unabhängig voneinander für 1 steht bei einer Monocarbonsäure oder für 1 oder 2 bei einer Dicarbonsäure.

R² steht unabhängig voneinander für H, Alkyl mit 1-20 Kohlenstoffatomen oder Alkylaryl mit 7-20 Kohlenstoffatomen. Besonders bevorzugt steht R² für H. Ebenfalls geeignet sind einseitig endgruppenverschlossene Monomere **B**, wobei R² Alkyl mit 1-20 Kohlenstoffatomen, insbesondere Methyl, oder Alkylaryl mit 7-20 Kohlenstoffatomen steht.

R³ steht unabhängig voneinander für eine Sturkturgruppe, die aus einer beim Monomer **A** definierten Dicarbonsäure nach Entfernung beider Carbonsäuregruppen abgeleitet wird, insbesondere für 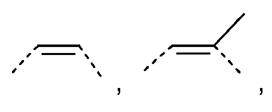 oder

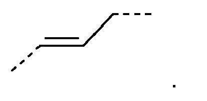

R⁴ steht unabhängig voneinander für eine Alkylgruppe mit 1-20 Kohlenstoffatomen, eine Alkylarylgruppe mit 7-20 Kohlenstoffatomen oder H, vorzugsweise R⁴=H.

Y ist unabhängig voneinander 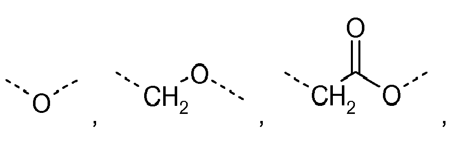 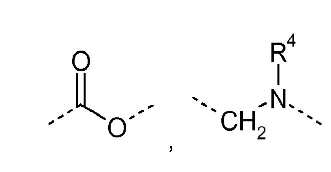 oder 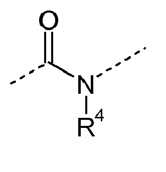 und x, y, z weisen unabhängig voneinander je die Werte 0 - 250 und x+y+z = 3 oder grösser. Vorzugsweise beträgt die Summe x+y+z mindestens 20, insbesondere bevorzugt 20-100.

Dabei weist r unabhängig voneinander den Wert 0 oder 1 auf.

Q steht dabei für den Rest eines Polyalkohols der Formel Q(OH)_{q+1} nach Entfernung aller OH Gruppen, wobei q für 2 bis 5, insbesondere 2 oder 3, steht.

Beispiele für Monomere **B** der Formel (I) sind Polyoxyalkylenmonovinylether, insbesondere Polyethylenglycolmonovinylether, Polyoxyalkylenmonoallylether, Polyoxyalkylenbutensäureester, Polyoxyalkylenacrylsäureester, Polyoxyalkylenmethacrylsäureester, Polyoxyalkylenallylamin, Polyoxyalkylenacrylamid, Polyoxyalkylenallylamid oder Polyoxyalkylen-N-(2-hydroxyethyl)maleinsäureamid.

Besonders bevorzugt sind Monomere B der Formel (I), wobei Y für -O-oder -CH₂-O- steht, sogenannte Polyoxyalkylenalkenylether, insbesondere Polyoxyalkylenallylether, Polyoxyalkylenmethallylether, Polyoxyalkylenisopropenylether oder Polyoxyalkylenvinylether.

Dabei steht R¹ insbesondere für 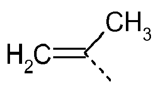 oder 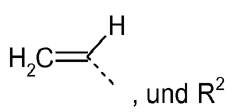 steht für H oder Methyl, n steht für 1, x ist 0 bis 100, y ist 0 bis 100, z ist 0, wobei x + y grösser als 3, vorzugsweise mindestens 20 ist, und die Oxyalkylengruppen (C₂H₄O) und (C₃H₆O) können in irgendeiner Reihenfolge, beispielsweise zufällig, statistisch, alternierend oder blockweise auftreten. Besonders bevorzugt ist y=0 und x = 20 - 60. Somit ist das Monomer **B** vorzugsweise ein Polyethylenglykolmonovinylether oder -monoallylether. Besonders bevorzugt ist Polyethylenglykolmonoallylether.

Beispiele für Monomere **B** der Formel (II) sind Vinylether oder Allylether von alkoxylierten, insbesondere ethoxylierten Alkoholen. Als Alkohole geeignet sind beispielsweise Alkylalkohole wie Propanol, Propandiol, Butanol, Butandiol, oder Glycerin, Diglycerin, Polyglycerin, Trimethylolethan, Trimethylolpropan, 1,3,5-Pentantriol, Erythrit, Pentaerythrit, Dipentaerythrit, Sorbit, Sorbitan, oder Isosorbid. Bevorzugte Monomere **B** der Formel (II) sind beispielsweise ethoxylierte Hydroxybutylvinylether oder 3-Allyloxy-1,2-propandiol.

Monomere **B** der Formel (III) sind Umsetzungsprodukte von Dicarbonsäuren, insbesondere von Maleinsäure, Fumarsäure, Citraconsäure oder Glutaconsäure, mit einem Polyoxyalkylenamin zu Dicarbonsäureimiden. Als Polyoxyalkylenamine sind insbesondere Monoamine geeignet, welche beispielsweise von der Firma Huntsman unter dem Namen Jeffamine® der M-Serie vertrieben werden.

Monomer **C** ist ein Vinylaromat und weist insbesondere die Formel (IV) auf:

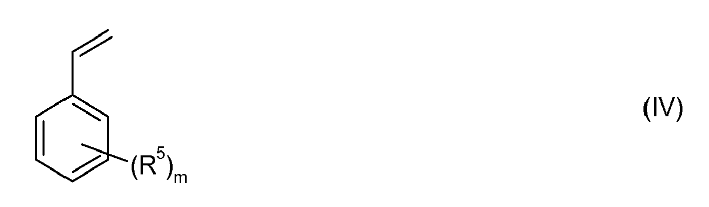

Dabei steht der Rest R⁵ unabhägig voneinader für einen linearen oder verzweigten Alkylrest mit 1-30 Kohlenstoffatomen, Alkoxy der Formel -OR⁶, Polyoxyalkyloxy der Formel -O-[(C₂H₄O)ₓ-(C₃H₆O)_{y}-(C₄H₈O)_{z}-R², Cl oder Methylchlorid, F oder Methylfluorid, Br oder Methylbromid, oder NO₂, wobei m für ein Zahl von 0 bis 5, vorzugsweise 0, steht, R⁶ unabhängig voneinander für Alkyl mit 1-30 Kohlenstoffatomen steht, und x, y, z unabhängig voneinander je die Werte 0 - 250 aufweisen und x+y+z = 3 oder grösser ist, und R² unabhängig voneinander für H, Alkyl mit 1-20 Kohlenstoffatomen oder Alkylaryl mit 7-20 Kohlenstoffatomen steht.

Als Monomer **C** kommen beispielsweise Styrol oder Alkylstyrol, beispielsweise Methyl- oder Ethylstyrol, oder Oxyalkylenstyrol, Vinyltoluol, Vinylxylol, oder Vinylbenzylchlorid in Frage. Besonders bevorzugt als Monomer **C** ist Styrol.

Monomer **D** ist hydrophob, also wasserunlöslich, und besitzt vorzugsweise mindestens eine strukturelle Gruppe mit Affinität zu unpolaren Substanzen auf. Monomer **D** weist insbesondere die Formel (V) auf:

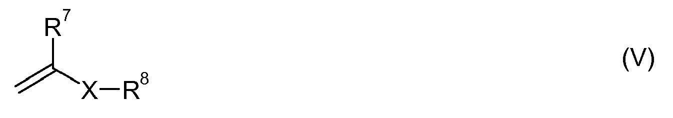

Dabei steht R⁷ für H oder Methyl und R⁸ für einen linearen oder verzweigten Alkylrest mit 2-30 Kohlenstoffatomen, für Cycloalkyl. Alkenyl, Alkylaryl oder Aralkyl mit 7-20 Kohlenstoffatomen, einen substituierten oder unsubstituierten Arylrest oder einen zweiwertigen Rest mit 2 bis 30 Kohlenstoffatomen, wobei R⁸, falls X 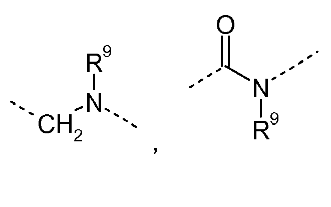 oder 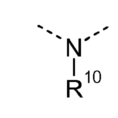 ist, gegebenenfalls mit R⁹ oder R¹⁰ und mit N einen Ring, insbesondere einen 5-er bis 8-er Ring, bildet, welcher gegebenenfalls aromatische Strukturen aufweist und gegebenenfalls im oder am Ring Heteroatome aufweist.

X steht für 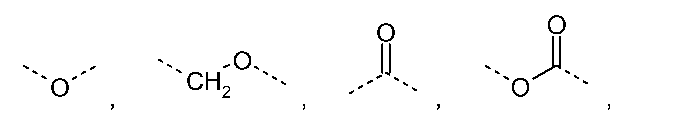 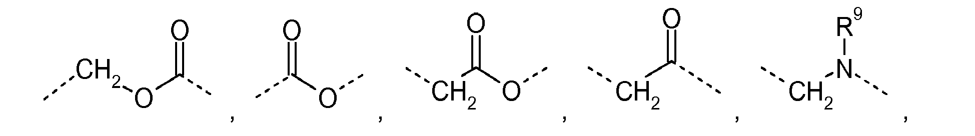 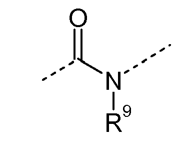 oder

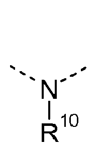

R⁹ steht für Alkyl mit 1-20 Kohlenstoffatomen, Alkylaryl mit 7-20 Kohlenstoffatomen oder H, vorzugsweise R⁹=H, wobei R⁹ gegebenenfalls mit N und mit R⁸ einen Ring, insbesondere einen 5-er bis 8-er Ring, bildet und gegebenenfalls im oder am Ring Heteroatome aufweist.

R¹⁰ steht für Alkyl mit 1-20 Kohlenstoffatomen, Alkylaryl mit 7-20 Kohlenstoffatomen oder Alkenyl mit 1 bis 20 Kohlenstoffatomen, wobei R¹⁰ gegebenenfalls mit N und mit R⁸ einen Ring, insbesondere einen 5-er bis 8-er Ring, bildet und gegebenenfalls im oder am Ring Heteroatome aufweist.

Vorzugsweise steht R⁷ für H, X für 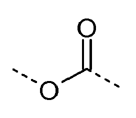 oder 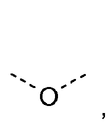 und R⁸ für einen verzweigten oder linearen Alkylrest mit 3 bis 20 Kohlenstoffatomen.

Insbesondere geeignet sind Vinylether oder Allylether, wie beispielsweise Butylvinylether, Isobutylvinylether, Allylpropylether, Allylbutylether oder Allylphenylether.

Ganz besonders bevorzugt sind Vinylester oder Allylester von Fettsäuren, beispielsweise Vinylpropionat, Vinylbutyrat, Allylpropionat, Allylbutyrat oder Laurinsäurevinylester. Besonders geeignet ist der Vinylester von Fettsäuren, insbesondere von einer Versatic®-Säure 9, welcher beispielsweise unter dem Namen VeoVa 9^{™} von Shell erhältlich ist. Als geeignete Fettsäuren, welche verestert werden, kommen beispielsweise Carbonsäuren mit 3 bis 30 Kohlenstoffatomen in Frage, insbesondere Propionsäure, Buttersäure, Valeriansäure, Laurinsäure, Palmitinsäure oder Stearinsäure.

Weitere Beispiele für Monomere **D** sind Ester der Acrylsäure, wie beispielsweise Acrylsäurebutylester, Acrylsäureisobutylester, Acrylsäure-2-ethylhexylester oder Laurylacrylat. Ebenfalls geeignet sind Ester der Butensäure, wie beispielsweise 3-Butensäure-*tert*-butylester.

Als Monomer **D** kommen beispielsweise auch Vinylpivalat, Vinyl(2)-ethylhexanoat, Vinylversatat, Vinylbenzoat, N-Allyl-methylbenzylamin, Phenylacrylamid, oder Alkylvinylamide in Frage.

Besonders bevorzugt werden als Monomere **D** nur solche Monomere ausgewählt, welche hydrophobe beziehungsweise wasserunlösliche Gruppen in die Polymerstruktur einbringen. Daher sind insbesondere Monomere **D** bevorzugt, welche als R⁸ einen verzweigten oder linearen Alkylrest mit mindestens 3, vorzugsweise mindestens 4 Kohlenstoffatomen aufweisen. Als "hydrophobe Monomere" sind vorzugsweise solche Monomere geeignet, welche als Homopolymere wasserunlösliche Homopolymere bilden.

Gegebenenfalls enthält das Polymer **P** zusätzlich mindestens ein basisches ethylenisch ungesättigtes Monomer **E** der Formel (VI),

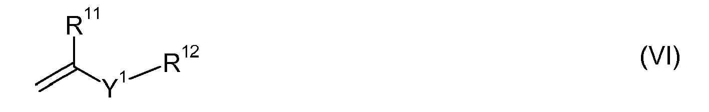

Dabei steht R¹¹ für H oder Methyl, Y¹ für 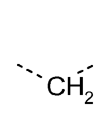 oder 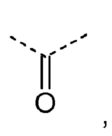 und R¹² für einen Rest mit mindestens einer primären, sekundären oder tertiären Aminogruppe, falls Y¹ gleich 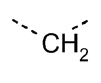 ist, und für einen Rest mit mindestens einer sekundären oder tertiären Aminogruppe, falls Y¹ gleich 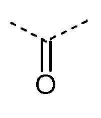 ist.

Vorzugsweise ist Y¹ -CH₂-. R¹² steht beispielsweise für eine Aminogruppe oder für eine verzweigte oder lineare Alkylenaminogruppe, welche gegebenenfalls Heteroatome aufweist, beispielsweise für eine Polyetheraminogruppe. Beispielsweise kann das Monomer **E** Allylamin oder N-Methylacrylamid sein.

Weitere Beispiele für mögliche Monomere **E** sind Umsetzungsprodukte von Allylglycidylether mit Ammoniak oder mit mindestens einem Amin. Das Amin kann beispielsweise ausgewählt sein aus der Gruppe bestehend aus Ethanolamin, Diethanolamin, Alkylamin, Anilin, Jeffamin® (wie sie beispielsweise von der Firma Huntsman GmbH, Hamburg, unter dem Namen Jeffamine® der M-Serie vertrieben werden), einer Aminosäure oder einem Alkyldiamin, beispielsweise Butyldiamin. Besonders bevorzugt sind Umsetzungsprodukte aus Allylglycidylether und Ethanolamin oder Sulfanilsäure.

Die Aminogruppe kann in der protonierten oder in der deprotonierten Form vorliegen.

Ein besonders bevorzugtes Beispiel für das Monomer **E** ist Allylamin.

Das weitere Monomer **W** kann ein beliebiges ethylenisch ungesättigtes Monomer sein, welches mit den Monomeren **A, B, C, D** und **E** polymerisierbar ist. Beispielsweise kann das Monomer **W** ein weiters Amid- oder Estermonomer sein. Beispielsweise kann das Monomer **W** ein Estermonomer sein, welche beispielsweise durch Umsetzung einer Mono- oder Dicarbonsäure mit einem Alkylalkohol, insbesondere einem C₆-C₂₀ Alkylalkohol, hergestellt wird.

Zur Herstellung des Polymers **P** kann eine Kombination von verschiedenen Monomeren **A, B, C** und **D** und gegebenenfalls **E** und/oder **W** in unterschiedlicher Menge verwendet werden. Beispielsweise können mehrere Monomere **A** gemischt eingesetzt werden, so zum Beispiel ein Gemisch von Maleinsäuremonomeren mit Acrylsäuremonomeren. Oder es können gemeinsam mehrere Monomere **B** verwendet werden, so zum Beispiel Polyoxyalkylenallylether mit Polyoxyalkylen(meth)acrylsäureester. Ebenfalls können verschiedene substituierte Styrole verwendet werden oder unterschiedliche Monomere **D** eingesetzt werden.

Das Polymer **P** wird vorzugsweise durch eine radikalische Polymerisation nach üblichen Verfahren erhalten. Sie kann in Lösungsmittel, beispielsweise in Toluol, Benzol, Wasser oder einer Mischung davon, bevorzugt in Wasser, oder in Substanz, erfolgen. Die Umsetzung der Monomere zu einem Polymer **P** erfolgt vorzugsweise bei einer Temperatur von bis 100°C. Es kann ein Gasstrom über oder durch die Reaktionsmischung geführt werden. Als Gasstrom kann Edelgas oder Stickstoff verwendet werden.

Die Polymerisation erfolgt vorteilhaft unter derartigen Bedingungen, dass das gebildeten Polymere aus 10 bis 500, bevorzugt 20 bis 200, insbesondere 25 bis 60, Monomerbausteinen aufgebaut ist. Das Polymer **P** weist vorzugsweise ein Molekulargewicht M_{w} von 2'000 bis 200'000 g/mol, bevorzugt von 5'000 bis 100'000 g/mol, bevorzugt von 8'000 bis 80'000 g/mol insbesondere bevorzugt von 10'000 bis 50'000 g/mol, auf.
Unter 'Molekulargewicht' oder 'Molgewicht' versteht man im Sinne der Erfindung das Molekulargewichtsmittel M_{w}.

Zur Regelung der Molekulargewichte können Regler eingesetzt werden, wie beispielsweise anorganische oder organische Schwefelverbindungen, Aldehyde, Ameisensäure oder anorganische Phosphorverbindungen.

Bei der Herstellung des Polymers **P** beträgt die vorzugsweise eingesetzte Menge der Monomere **A** 5-90 Mol-%, bevorzugt 30-70 Mol-%, insbesondere bevorzugt 55-65 Mol-%, die von **B** 8-40 Mol-%, bevorzugt 10-20 Mol-%, insbesondere bevorzugt 12-18 Mol-%, die von **C** 0.1-30 Mol-%, bevorzugt 10-20 Mol-%, insbesondere bevorzugt 12-18 Mol-%, die von **D** 0.1-30 Mol-%, bevorzugt 6-10 Mol-%, insbesondere bevorzugt 7-9 Mol-%, die von **E** 0-10 Mol-%, bevorzugt 0-7 Mol-%, insbesondere bevorzugt 0.1-2 Mol-%, und die von **W** 0-5 Mol-%, bevorzugt 0-1 Mol-%, insbesondere bevorzugt 0-0.1 Mol-%, jeweils bezogen auf die Gesamtmolmenge der eingesetzten Monomere von **A, B, C, D, E** und **W**.
Das Molverhältnis der Monomere **A:B** ist vorzugsweise ≤ 10:1, bevorzugt ≤ 8:1, insbesondere ≤ 3:1.

Ein besonders bevorzugtes Polymer **P** ist erhältlich durch die Copolymerisationsreaktion von Acrylsäure oder Methacrylsäure und gegebenenfalls Maleinsäure als Monomer **A** mit Polyethylenglycolvinylether oder Polyethylenglycolallylether als Monomer **B**, Styrol als Monomer **C**, Vinylester einer C₄ bis C₂₀ Fettsäure, insbesondere VeoVa 9^{™}, als Monomer **D**, und gegebenenfalls Allylamin als Monomer **E**.

Ein bevorzugtes Polymer **P** weist die Formel (VIII) auf.

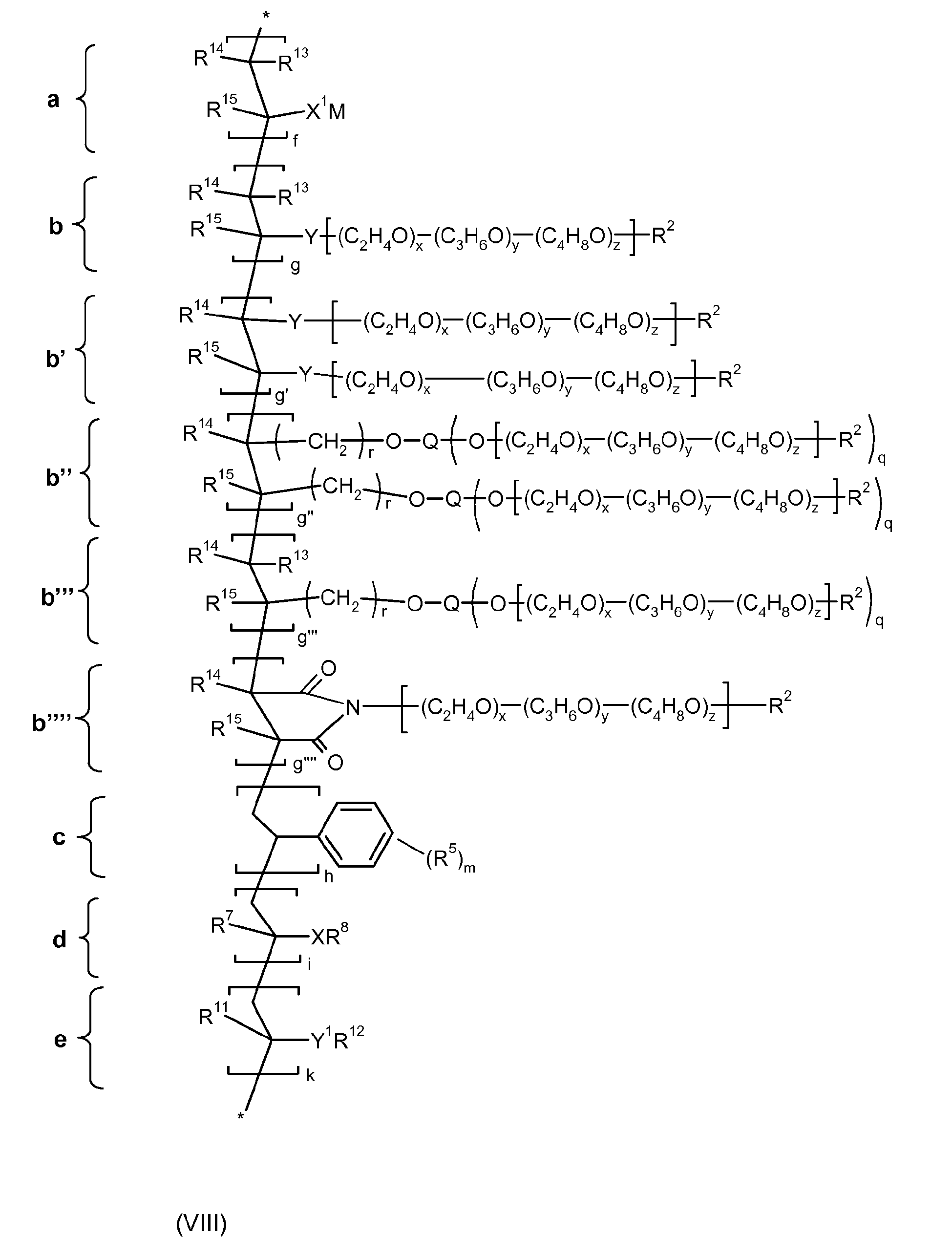

Die Substituenten R², R³, R⁴, R⁵, R⁶, R⁷, R⁸, R⁹, R¹⁰, R¹¹, R¹², Q, X, X¹, Y, Y¹, und die Indizes n, q, r, x, y, und z weisen unabhängig voneinander jeweils dieselben Bedeutungen auf, wie sie bereits für die Monomere **A, B, C, D,** und **E** beschrieben wurden.
Die Indizes f, g, g', g", g''', g'''', h, i, k bedeuten Zahlen und die Summe f+g+g'+g''+g'''+g''''+h+i+k = 10 bis 500, wobei f>0, (g+g'+g''+g'''+g'''')>0, h>0, i>0, und k≥0 ist.

Die Buchstaben **a, b, b', b'', b''', b'''', c, d,** und **e** bedeuten Struktureinheiten, wobei Struktureinheit **a** durch Polymerisation des Monomers **A,** Struktureinheit **b, b', b'', b'''** oder **b''''** durch Polymerisation des Monomers **B**, Struktureinheit c durch Polymerisation des Monomers **C**, Struktureinheit **d** durch Polymerisation des Monomers **D**, Struktureinheit e durch Polymerisation des Monomers **E** mit den jeweils anderen Monomeren entsteht.
Die Abfolge der Strukturbausteine **a, b, b', b'', b''', b'''', c, d,** und gegebenenfalls e kann alternierend, statistisch, blockweise oder zufällig sein.
Polymer **P** weist vorzugsweise 5-90 Mol-% Strucktureinheiten a, 8-40 Mol-% Struktureinheiten **b+b'+b''+b'''+b''''**, 0.1-30 Mol-% Strucktureinheiten **c**, 0.1-30 Mol-% Strucktureinheiten **d**, und 0-10 Mol-% Strucktureinheiten **e,** auf, jeweils bezogen auf die Gesamtmolmenge der Strucktureinheiten von **a, (b+b'+b''+b'''+b''''), c, d** und **e** des Polymers **P.** Das Molverhältnis von **a:(b+b'+b''+b'''+b'''')** ist vorzugsweise ≤ 10:1.

Das Polymer **P** kann eine Kombination von verschiedenen Struktureinheiten der jeweiligen Struktureinheiten von **a, b, c, d** und gegebenenfalls **e** aufweisen. Beispielsweise können mehrere Struktureinheiten **a** gemischt im Polymer **P** vorkommen, so zum Beispiel ein Gemisch von Maleinsäureeinheiten mit Acrylsäureeinheiten. Oder es können mehrere verschiedene Struktureinheiten **b, b', b'', b''', b''''** oder auch unterschiedliche Struktureinheiten der jeweiligen Einheiten **b, b', b'', b''', b''''** gemischt im Polymer **P** vorkommen. Es können auch mehrere Styroleinheiten **c** im Polymer **P** vorliegen, bei denen beispielsweise das Styrol unterschiedlich substituiert ist. Ebenfalls können gemeinsam verschiedene hydrophobe Struktureinheiten d im Polymer **P** vorkommen, so beispielsweise ein Vinylether mit einem Vinylester einer Fettsäure.

Die verschiedenen Struktureinheiten können in irgendeiner Reihenfolge, beispielsweise zufällig, alternierend oder blockweise im Polymer P vorliegen.

Je nach Menge und Art eingesetzten Monomere können unterschiedliche Eigenschaften des Endproduktes erzielt werden. Es ist deshalb ein weiterer Vorteil des erfindungsgemässen Polymers **P**, dass einfach und kosteneffizient durch Verwendung unterschiedlicher Monomere oder unterschiedlicher Mengen der Monomere mehrere unterschiedliche massgeschneiderte Polymere **P** hergestellt werden können. Dies hat grosse logistische sowie wirtschaftliche Vorteile.

Das Polymer **P** findet in unterschiedlichen Bereichen Anwendung, insbesondere in der Beton- und Zementtechnologie.

Die erfindungsgemässen Polymere **P** sind aufgrund ihrer Struktur, welche hydrophile wie auch hydrophobe Struktureinheiten umfasst, besonders geeignet für die Verwendung als Emulgator für wässrige Zusammensetzungen, insbesondere für Öl in Wasser Emulsionen. Daher betrifft die vorliegende Erfindung die Verwendung des erfindungsgemässen Polymers **P** als Emulgator für wässrige Zusammensetzungen, insbesondere für Zusatzmittel für hydraulisch abbindende Systeme. Beispielsweise eignet sich das erfindungsgemässe Polymer **P** hervorragend, um wässrige Gips- oder Betonverflüssiger und hydrophobe Entschäumer zu emulgieren.

Zusätzlich betrifft die vorliegende Erfindung eine Zusammensetzung **Z** umfassend mindestens ein erfindungsgemässes Polymer **P** und mindestens einen Entschäumer **M**. Als Entschäumer **M** kommen insbesondere Phosphorsäureester, wie beispielsweise Tributylphosphat oder Triisobutylphosphat (TIBP), Polyalkylenglykole wie beispielsweise Polypropylenoxide, Blockcopolymere enthaltend Ethylen-, Propylen- oder Butylenoxide, Mineral- oder Pflanzenöle, Fettsäure, Fettsäureester, Fettalkohole, alkoxylierte Fettsäuren oder Fettalkohole, Silikone, Silikonester oder eine hydrophobe organische Verbindung in Frage.

Typischerweise beträgt dabei der Anteil des Polymers **P** in einer Zusammensetzung **Z** umfassend mindestens ein Polymer **P** und mindestens einen Entschäumer **M** 20 bis 80 Gewichts-%, insbesondere 30 bis 49 Gew.-%, und der Anteil des Entschäumers **M** beträgt vorzugsweise 0.1 bis 20 Gew.-%, insbesondere 0.5 bis 10 Gew.-%, bezogen auf das Gewicht der Zusammensetzung **Z**. Das Verhältnis des Polymers **P** zum Entschäumer **M** in der wässrigen Zusammensetzung **Z** beträgt vorzugsweise 2:3 bis 49:1, insbesondere 3:2 bis 10:1. Vorzugsweise enthält die Zusammensetzung **Z** zusätzlich Wasser.

In einer weiteren Ausführungsform betrifft die vorliegende Erfindung eine wässrige Zusammensetzung **Z** umfassend Wasser, mindestens ein erfindungsgemässes Polymer **P**, mindestens einen Entschäumer **M**, und mindestens einen Verflüssiger **V** für hydraulisch abbindende Zusammensetzungen. Als Verflüssiger **V** kommen vorzugsweise Polycarboxylatverflüssiger, wie sie beispielsweise in der Betonchemie als Hochleistungsverflüssiger bekannt sind, in Frage. Solche Polycarboxylatverflüssiger sind beispielsweise in EP 0 056 627 B1, EP 0 810 712 B1, EP 1 136 508 A1, EP 1 138 697 B1 oder EP 1 348 729 A1 beschrieben. Besonders bevorzugt sind Verflüssiger, welche nach der polymeranalogen Umsetzung hergestellt wurden, wie beispielsweise beschrieben in EP 1 138 697 B1 oder EP 1 348 729 A1. Ebenfalls als Verflüssiger **V** können Lignin-Sulfonate, sulfonierte Melamin- oder NaphthalinFormaldehydkondensate, vinylische Copolymere oder Mischungen davon verwendet werden. Generell können alle Zusammensetzungen verwendet werden, welche geeignet sind, hydraulisch abbindende Zusammensetzungen zu verflüssigen. Besonders geeignet sind aber wässrige Polymermischungen von Polycarboxylatverflüssiger.

Zur Herstellung der Zusammensetzung **Z**, insbesondere einer wässrigen Zusammensetzung **Z** umfassend das erfindungsgemässe Polymer **P** wird das mindestens eine erfindungsgemässe Polymer **P** mit dem Entschäumer **M** und gegebenenfalls dem Verflüssiger **V** vermischt. Vorzugsweise wird zuerst das Polymer **P**, vorzugsweise als wässrige Emulsion, mit dem Entschäumer **M** vorgemischt und danach gegebenenfalls eine wässrige Lösung eines Verflüssigers **V** zugegeben. Durch das Zusammenmischen des erfindungsgemässen Polymers **P** mit dem Entschäumer **M** und dem Verflüssiger **V** in Wasser wird eine stabile wässrige Polymermischung **Z** ohne Phasentrennung erhalten, welche über mehrere Monate lagerstabil ist.
Die wässrige Zusammensetzung **Z** kann, falls gewünscht vor der Verwendung in Pulverform überführt werden, z.B. durch Sprühtrocknung, mit Hilfe von Schutzkolloiden oder anderen Trocknungshilfsmitteln, In Pulverform kann die wässrige Mischung **Z** gelagert werden oder aber einer Trockenmischung enthaltend mindestens eine hydraulisch abbindende Substanz zugesetzt werden. Die Trockenmischung ist über längere Zeit lagerfähig und wird typischerweise in Säcken abgepackt oder in Silos gelagert.
Das Polymer **P** und gegebenenfalls der Entschäumer **M** können auch zuerst in Substanz hergestellt werden und anschliessend zu einem Verflüssiger **V**, welcher als Polymerschmelze vorliegt, gegeben werden. Wird die Polymerschmelze mit Verflüssiger **V**, dem zugegebenen Polymer **P** und dem Entschäumer **M** abgekühlt, erhält man eine Zusammensetzung in fester Form, insbesondere Schuppen, Flocken, Pellets, oder Platten. Diese feste Polymerzusammensetzung kann gelagert werden und vor Gebrauch in Wasser gelöst werden, wodurch die erfindungsgemässe wässrige Zusammensetzung **Z** entsteht.

Typischerweise beträgt dabei der Anteil des Polymers **P** in einer Zusammensetzung umfassend Wasser, mindestens ein Polymer **P**, mindestens einen Entschäumer **M** und mindestens einen Verflüssiger **V** 0.04 bis 10 Gewichts-%, insbesondere 0.05 bis 5 Gew.-%, bezogen auf das Gewicht der wässrigen Zusammensetzung **Z**.
Das Verhältnis des Polymers **P** zum Entschäumer **M** in der wässrigen Zusammensetzung **Z** beträgt vorzugsweise 2:3 bis 10:1, insbesondere 3:2 bis 3:1. Falls die wässrige Zusammensetzung **Z** mindestens einen Verflüssiger **V** enthält, beträgt der Anteil des Verflüssigers **V** vorzugsweise 3 bis 50 Gewichts-%, insbesondere 20 bis 40 Gew.-%, bezogen auf das Gewicht der wässrigen Zusammensetzung **Z**.
Die wässrige Zusammensetzung **Z** kann weitere Bestandteile enthalten. Beispiele hierfür sind Lösungsmittel oder Additive, wie sie in der Bauchemie geläufig sind, insbesondere oberflächenaktive Stoffe, Stabilisatoren gegen Hitze und Licht, Farbstoffe, Beschleuniger, Verzögerer, Schaumbildner.

Die hydrophile Wirkung erhält das Polymer **P** insbesondere durch die Verwendung der Polyoxyalkylengruppen von Monomer **B** bei der Herstellung der Polymers **P**.
Die hydrophobe Wirkung wird durch die Verwendung der hydrophoben Monomere **C** und **D** erreicht. Es ist daher besonders von Vorteil, dass neben dem hydrophoben Monomer **C** auch solche Monomere **D** ausgewählt werden, welche hydrophobe, beziehungsweise schlecht wasserlösliche oder wasserabstossende Gruppen in die Polymerstruktur einbringen.

Da das Polymer **P** auch selber eine verflüssigende Wirkung zeigt, kann es zudem auch als Verflüssiger für hydraulisch abbindende Zusammensetzungen verwendet werden. In einem weiteren Aspekt betrifft die Erfindung daher die Verwendung des erfindungsgemässen Polymers **P** als Verflüssiger für hydraulisch abbindende Zusammensetzungen, insbesondere für Beton und Mörtel.

Da das Polymer **P** gleichzeitig als Emulgator wie auch als zusätzlicher Verflüssiger wirken kann, kann es die Wirkung des eigentlichen Gips- oder Betonverflüssigers im Gips oder Beton verstärken und zu hervorragenden mechanischen Eigenschaften im Gips oder Beton führen.

Das Polymer **P** wird bevorzugt in einer Menge von 0.005 bis 5 Gew.-% Polymergehalt bzw. Feststoff bezogen auf das Gewicht des hydraulischen Bindemittels verwendet. Es können auch mehrere Polymere **P** gemischt verwendet werden, um die gewünschte Wirkung zu erzielen.

Als hydraulisch abbindende Systeme oder Zusammensetzungen können grundsätzlich alle dem Beton-Fachmann bekannten hydraulisch abbindenden Substanzen verwendet werden. Insbesondere handelt es sich hier um hydraulische Bindemittel wie Zemente, wie beispielsweise Portlandzemente oder Tonerdeschmelzzemente und respektive deren Mischungen mit Flugaschen, Silica fume, Schlacke, Hüttensande und Kalksteinfiller. Weitere hydraulisch abbindende Substanzen im Sinne der vorliegenden Erfindung sind Gips, in Form von Anhydrit, Halbhydrat oder Dihydrat oder gebrannter Kalk. Als hydraulischen abbindende Zusammensetzung wird Zement bevorzugt. Weiterhin sind Zuschlagstoffe wie Sand, Kies, Steine, Quarzmehl, Kreiden sowie als Additive übliche Bestandteile wie andere Betonverfüssiger, beispielsweise Lignosulfonate, sulfonierte Naphthalin-Formaldehyd Kondensate, sulfonierte MelaminFormaldehyd-Kondensate oder Polycarboxylatether, Beschleuniger, Korrosionsinhibitoren, Verzögerer, Schwindreduzierer, Entschäumer oder Porenbildner möglich.

Das erfindungsgemässe Polymer **P** kann ein Bestandteil einer wässrigen Zusammensetzung sein, welche über längere Zeit lagerstabil ist, oder es kann ein Bestandteil einer hydraulisch abbindenden Zusammensetzung sein. Als Bestandteil einer hydraulisch abbindenden Zusammensetzung kann das Polymer **P** einer üblichen hydraulisch abbindenden Zusammensetzung mit oder kurz vor oder kurz nach der Zugabe des Wassers beigegeben werden. Als besonders geeignet gezeigt hat sich hierbei die Zugabe des Polymers **P** in Form einer wässrigen Lösung oder Dispersion, insbesondere als Anmachwasser oder als Teil des Anmachwassers.
Das Polymer **P** verfügt über Eigenschaft als Verflüssiger für hydraulisch abbindende Zusammensetzungen, insbesondere zementöse Zusammensetzungen, das heisst, dass bei in der Zement- und Betontechnologie üblichen Wasser/Zement-(W/Z-)Verhältnissen die resultierende Mischung eine bedeutend grösseres Fliessverhalten aufweist im Vergleich zu einer Zusammensetzung ohne den Verflüssiger. Das Fliessverhalten wird typischerweise über das Ausbreitmass gemessen. Andererseits können Mischungen erzielt werden, die bei gleichem Fliessverhalten bedeutend weniger Wasser benötigen, so dass die mechanischen Eigenschaften der ausgehärteten hydraulisch abbindenden Zusammensetzung stark erhöht sind. Eine spezielle Verwendung stellt die gleichzeitige Verwendung des Polymers **P** als Emulgator bei der Herstellung der Polymermischung, welche den eigentlichen Verflüssiger **V** enthält, und die Verwendung als zusätzlichen Verflüssiger, welcher die Wirkung des eigentlichen Verflüssigers **V** verstärkt, dar.

### Beispiele

### 1.1 Verwendete Abkürzungen

**Tabelle 1 Verwendete Abkürzungen. ^{*}Mw = mittleres Molekulargewicht**

| **Abkürzung** | **Bedeutung** | **Mw^{*}** | **Hersteller** |
|---|---|---|---|
| Allyl-PEG1100 | Polyethylenglykolallylether | 1100 g/mol | Clariant |
| Allyl-PEG2000 | Polyethylenglykolallylether | 2000 g/mol | Clariant |
| Vinyl-PEG1000 | Polyethylenglykolvinylether | 1000 g/mol | Clariant |
| | | | Christ |
| VEOVA®9 | Vinylester der Versatic®-Säure 9 | | Chemie |
| | | | AG |

### 1.2. Herstellvorschrift A für Polymere P8 bis P10

In einem Reaktionsgefäss mit Ankerrührer (IKA®-Rührwerk), Temperatursonde, Rückflusskühler und zwei separaten Zulaufstutzen wurden in etwa gleicher Menge Wasser und Allyl-PEG (erhältlich bei Clariant, Basel, Schweiz), sowie Styrol (erhältlich bei Fluka, Schweiz) und VEOVA®9 (erhältlich bei Christ Chemie AG, Schweiz) in einer gemäss Tabelle 2 angegebenen Menge vorgelegt und auf 85°C gebracht. Sobald 85°C erreicht war, wurde 0.1g Natriumhypophospit (erhältlich bei Fluka, Schweiz) zugegeben. Anschliessend wurde in einem Zeitraum von 2 Stunden simultan über den erste Zulauf Acrylsäure und gegebenenfalls Maleinsäure (beide erhältlich bei Fluka, Schweiz) und über den zweiten Zulauf 20 g einer 10%-igen Natruimpersulfatlösung (erhältlich bei Fluka, Schweiz) zudosiert. Die Temperatur wurde dabei zwischen 85°C- 95°C gehalten. Nachdem alles zudosiert war, wurde eine weitere Stunde bei 90°C nachpolymerisiert. Danach wurde mit der entsprechenden Wassermenge auf den gewünschten Feststoffgehalt des Polymers von 40 Gew.-%, bezogen auf das Gesamtgewicht der Polymerlösung, verdünnt.

### 1.3. Herstellvorschrift B für Polymere P1 bis P7

In einem Reaktionsgefäss mit Ankerrührer (IKA®-Rührwerk), Temperatursonde, Rückflusskühler und zwei separaten Zulaufstutzen wurden in etwa gleicher Menge Wasser und Allyl-PEG beziehungsweise Vinyl-PEG (erhältlich bei Clariant, Basel, Schweiz) und gegebenenfalls Allylamin (erhältlich bei Fluka, Schweiz) in einer gemäss Tabelle 2 angegebenen Menge vorgelegt und auf 22°C abgekühlt. Anschliessend wurden Styrol (erhältlich bei Fluka, Schweiz), VEOVA®9 (erhältlich bei Christ Chemie AG, Schweiz), und Maleinsäure beziehungsweise Itaconsäure zugegeben. Falls anstelle von einem Allyl-PEG ein Vinylether verwendet wird, wird der pH-Wert mittels Natronlauge auf pH 5.5 angehoben). Wenig Fe(II)SO₄ (0.1 g) wurde zugegeben und anschliessend wurde die Acrylsäure oder das Salz der Acrylsäure in die Vorlage transferiert.
Unter Rühren wurden nun über den ersten Zulauf eine 15%-ige Lösung von 10g Rongalit^{™}C (erhältlich bei BASF, Deutschland) in Wasser und über den zweiten Zulauf eine 35%-ige Lösung von 21g Wasserstoffperoxid (erhältlich bei Fluka, Schweiz) in Wasser in die Vorlage getropft, wobei die Temperatur von 22°C auf 55°C anstieg. Die Rongalit^{™}C Lösung wurde über den ersten Zulauf in 25 Minuten zugetropft und die Wasserstoffperoxid-Lösung über den zweiten Zulauf in 35 Minuten. Am Schluss wurde die Emulsion mit Wasser auf den gewünschten Polymergehalt von 40 Gew.-%, bezogen auf das Gesamtgewicht der Polymerlösung, verdünnt.

**Tabelle 2: Erfindungsgemässe Polymere P (P-1 bis P-10). Die Mengen sind in Mol angegeben.**

| Nr. | Monomer **A** | | | Monomer **B** | | | Monomer **C** | Monomer **D** | Monomer **E** | Herstellverfahren |
|---|---|---|---|---|---|---|---|---|---|---|
| | Acrylsäure | Malein -säure | Itaconsäure | Allyl-PEG-1100 | Allyl-PEG-2000 | Vinyl-PEG-1000 | Styrol | VEOVA ®9 | Allyl-amin | |
| **P-1** | 1.2 | 0.3 | | 0.4 | | | 0.415 | 0.215 | | B |
| **P-2** | 1.2 | 0.388 | | 0.4 | | | 0.392 | 0.215 | | B |
| **P-3** | 1.2 | 0.491 | | 0.4 | | | 0.415 | 0.199 | | B |
| **P-4** | 1.2 Na- salz | 0.388 | | | | 0.4 | 0.415 | 0.215 | | B |
| **P-5** | 1.36 | 0.2 | | 0.4 | | | 0.415 | 0.215 | 11.4 | B |
| **P-6** | 2 | | | 0.5 | | | 0.49 | 0.268 | | B |
| **P-7** | 1.2 | | 0.2 | 0.4 | | | 0.415 | 0.215 | | B |
| **P-8** | 2 | | | 0.5 | | | 0.49 | 0.268 | | A |
| **P-9** | 1.2 | | | | 0.3 | | 0.294 | 0.16 | | A |
| **P-10** | 1.2 | 0.142 | | | 0.3 | | 0.309 | 0.16 | | A |

### 2. Herstellung von wässrigen Zusammensetzungen Z

Zur Herstellung einer erfindungsgemässen wässrigen Zusammensetzung **Z** wurde zuerst eine 40%-ige wässrige Emulsion des erfindungsgemässen Polymers **P** hergestellt. Dazu wurde 40 Gew.-% eines Polymers **P** gemäss Tabelle 2 mit 60 Gew.-% Wasser vermischt. In die 40%-ige wässrige Polymer-Emulsion wurde ein Entschäumer **M** gemischt, und je nach Versuch wurde dieses Gemisch zu einer 30%-igen wässrigen Lösung eines Verflüssigers **V**, in einer gemäss Tabelle 3 angegebenen Menge, unter Rühren zugegeben oder geschüttelt. Die 30%-ige wässrige Lösung des Verflüssigers **V** wurde durch Mischen von 30 Gew.-% eines Verflüssigers **V** mit 70 Gew.-% Wasser hergestellt.

Als Verflüssiger **V** wurde ein Polymer, welches nach der polymeranalogen Umsetzung hergestellt wurde, und welches in WO2005/123621A1 in Tabelle 2 als Polymer A4 beschrieben wurde, verwendet. Als Entschäumer **M-1** wurde Pronal® 735 S (erhältlich bei Toho Chemical Industry Co., Ltd), als **M-2** wurde Polypropylenglycol mit einem mittleren Molekualrgewicht M_{w} von 1200 g/mol (erhältlich bei Fluka, Schweiz), als **M-3** wurde Triisobutylphosphat (erhältlich bei Fluka, Schweiz), und als **M-4** Pluronic® PE 3100 (erhältlich bei BASF, Deutschland) verwendet.
Bei der Zusammensetzung **Z-21** wurde anstelle des emulgierenden Polymers **P** ein herkömmliches Tensid Texapon NSO der Firma Cognis GmbH (Monheim, Deutschland) als Vergleich verwendet. Dazu wurden 1.75 Gew.-% des Handelsproduktes Texapon NSO verwendet und nicht eine 40%-ige Emulsion.

**Tabelle 3: Stabilität von wässrigen Zusammensetzungen Z-1 bis Z-23; die Menge des Verflüssigers V ist als eine 30%-ige wässrige Lösung, die des Polymers P als 40%-ige wässrige Emulsion und die des Entschäumers M als 100%ige Flüssigkeit angegeben. Die Prozentangaben in Tabelle 3 sind Gew-% bezogen auf das Gesamtgewicht der wässrigen Zusammensetzung Z. Eine Ausnahme stellt das Texapon NSO in Z-21 dar, von welchem 1.75 Gew.-% des Handelsproduktes verwendet wurde und nicht eine 40%-ige wäßrige Emulsion davon.**

| Zusammensetzung **Z** | Verflüssiger **V** (als 30%-ige Lösung) | Polymer **P** (als 40%-ige Emulsion) | Entschäumer **M** | Stabilität (Lagerung bei 20°C nach 30 Tagen) |
|---|---|---|---|---|
| **Z-1** | 98.45 % | 1.25 % **P-1** | 0.3 % **M-1** | stabil |
| **Z -2** | 98.45 % | 1.25 % **P-2** | 0.3 % **M-1** | stabil |
| **Z -3** | 98.45 % | 1.25 % **P-3** | 0.3 % **M-1** | stabil |
| **Z -4** | 98.45 % | 1.25% **P-4** | 0.3 % **M-1** | stabil |
| **Z -5** | 98.45 % | 1.25 % **P-5** | 0.3 % **M-1** | stabil |
| **Z -6** | 98.45 % | 1.25 % **P-6** | 0.3 % **M-1** | stabil |
| **Z -7** | 98.45 % | 1.25 % **P-7** | 0.3 % **M-1** | stabil |
| **Z -8** | 98.45 % | 1.25 % **P-8** | 0.3 % **M-1** | stabil |
| **Z -9** | 98.45 % | 1.25 % **P-9** | 0.3 % **M-1** | stabil |
| **Z-10** | 98.45 % | 1.25 % **P-10** | 0.3 % **M-1** | stabil |
| **Z-11** | 98.45 % | 1.25 % **P-6** | 0.2 % **M-1** | stabil |
| | | | 0.1 % **M-4** | |
| **Z-12** | 98.35 % | 1.25% **P-6** | 0.2 % **M-1** | stabil |
| | | | 0.2 % **M-4** | |
| **Z-13** | 98.25 % | 1.25 % **P-6** | 0.2 % **M-1** | stabil |
| | | | 0.3 % **M-4** | |
| **Z-14** | 97.9 % | 1.5 % **P-6** | 0.2 % **M-1** | stabil |
| | | | 0.4 % **M-4** | |
| **Z-15** | 98.5 % | 1.25 % **P-1** | 0.25 % **M-3** | stabil |
| **Z-16** | 96.95 % | 2.5 % **P-1** | 0.15 % **M-1** | stabil |
| | | | 0.4 % **M-2** | |
| **Z-17** | 95.45 % | 3.75 % **P-1** | 0.3 % **M-1** | stabil |
| | | | 0.6 % **M-2** | |
| **Z-18** | 97.02 % | 2.5 % **P-3** | 0.38 % **M-1** | stabil |
| | | | 0.1 % **M-3** | |
| **Z-19** | 94.12 % | 5 % **P-4** | 0.88 % **M-1** | stabil |
| **Z-20** | 100.00 % | | | stabil |
| **Z-21** | 97.95 % | 1.75 % Texapon NSO | 0.3 % **M-1** | Separation |
| **Z-22** | ohne | 80.0 % **P-4** | 20.0 % **M-1** | stabil |
| **Z-23** | 99.7 | ohne | 0.3 | Separation |

Tabelle 3 zeigt, dass das Polymer **P** hervorragende Eigenschaften als Emulgator aufweist und zu stabilen wässrigen Emulsionen eines Gemischs aus Verflüssiger und Entschäumer führt. Im Gegensatz dazu ist eine Mischung aus Verflüssiger und Entschäumer ohne den erfindungsgemässen Emulgator nicht stabil (siehe Zusammensetzung **Z-23**). Ebensowenig vermag ein herkömmliches Tensid (beispielsweise Texapon NSO von Cognis GmbH) ein Gemisch aus Verflüssiger und Entschäumer zu emulgieren und es kommt zu einer Phasentrennung (siehe Zusammensetzung **Z-21**).

### 3. Bestimmung des Luftgehaltes in Frischmörtel

Die Wirksamkeit der erfindungsgemässen wässrigen Zusammensetzungen **Z** wurde im Frischmörtel getestet.

| Zusammensetzung der Mörtelmischung (**MM**): (Grösstkorn 8mm) | Menge |
|---|---|
| Zement (Schweizer CEM I 42.5) | 750 g |
| Kalksteinfiller | 141 g |
| Sand 0-8 mm | 3150 g |
| Wasser | 440 g |
| Wässrige Zusammensetzung **Z** gemäss Tabelle 3 | 5.3 g |

Die Sande, der Filler und der Zement wurden 1 Minute in einem HobartMischer trocken gemischt. Innerhalb von 30 Sekunden wurde das Anmachwasser, in dem die wässrige Zusammensetzung **Z** gelöst war, zugegeben und noch weitere 2.5 Minuten gemischt. Die Gesamt-Mischzeit nass ist 2.5 Minuten. Die wässrige Zusammensetzungen **Z** wurden in Flaschen aufbewahrt und 30 Tage bei Raumtemperatur gelagert. Danach wurde mittels einer Pipette die verwendete Probemenge (5.3g) am Flaschenboden entnommen.

Der Luftgehalt des Mörtels wurde mit einem Luftgehaltsprüfer gemäss EN 1015-7 bestimmt. Falls der Luftgehalt erst nach 30 Minuten gemessen wurde, wurde die Mörtelmischung vor dem Messen 10 Sekunden im Hobartmischer aufgemischt.

**Tabelle 4: Luftporengehalt im Frischmörtel in % gemessen nach 3 Minuten bzw. nach 30 Minuten.**

| Mörtelmischung **MM** | Zusammensetzung **Z** gemäß Tabelle 3 | Luftgehalt in Mörtel in % nach 3 Minuten | Luftgehalt in Mörtel in % nach 30 Minuten mit 10 Sekunden Mischen |
|---|---|---|---|
| **MM-1** | **Z-1** | 2.8 | 3.0 |
| **MM-2** | **Z-2** | 2.6 | 3.1 |
| **MM-3** | **Z-3** | 2.6 | 2.8 |
| **MM-4** | **Z-4** | 2.7 | 3.3 |
| **MM-5** | **Z-5** | 2.9 | 3.5 |
| **MM-6** | **Z-6** | 3.0 | 3.1 |
| **MM-7** | **Z-7** | 2.5 | 2.6 |
| **MM-8** | **Z-8** | 2.7 | 3.2 |
| **MM-9** | **Z-9** | 2.4 | 2.6 |
| **MM -10** | **Z-10** | 2.5 | 2.9 |
| **MM -11** | **Z-11** | 1.8 | 2.2 |
| **MM -12** | **Z-12** | 1.6 | 2.0 |
| **MM -13** | **Z-13** | 1.6 | 1.9 |
| **MM -14** | **Z-14** | 1.5 | 2.1 |
| **MM -15** | **Z-15** | 3.3 | 3.5 |
| **MM -16** | **Z-16** | 2.5 | 3.0 |
| **MM -17** | **Z-17** | 2.4 | 2.6 |
| **MM -18** | **Z-18** | 3.2 | 2.6 |
| **MM -19** | **Z-19** | 1.6 | 1.5 |
| **MM -20** | **Z-20** | 8.8 | 7.8 |
| **MM -21** | **Z-21** | 13.2 | 13.8 |
| **MM -22** | **Z-22** | 1.8 | 1.8 |
| **MM -23** | **Z-23** | 4.0 | 4.7 |

Tabelle 4 zeigt, dass eine wässrige Zusammensetzung umfassend das erfindungsgemässe Polymer **P**, einen Verflüssiger **V** und einen Entschäumer **M** zu einer verbesserten Mörtelqualität führt und den Luftgehalt sowohl zu Beginn als auch über längere Zeit tief halten kann. Wird kein Polymer **P** dazugegeben (siehe Mörtelmischung MM-20) oder wird anstelle des Polymers **P** ein herkömmliches Tensid dazugegeben (siehe Mörtelmischung MM-21), steigt der Luftgehalt erheblich an und die Mörtelqualität wird schlechter.

### 4. Fliessverhalten der Polymere P

Zur Untersuchung der Wirkung des Polymers **P** auf das Fliessverhaltens einer Zementmischung wurde das Ausbreitmass (ABM) bestimmt.

Für den Vergleichsversuch ohne Polymer **P** und ohne herkömmliches Tensid oder herkömmlichen Verflüssiger wurden 100 Gramm Portlandzement Typ I CEM 42.5 mit 33 Gramm Wasser (W/Z Wert beträgt 0.33) eine Minute gemischt und anschliessend in den Mini-Konus (Innendurchmesser oben 18.5 mm, unten 37.5 mm, Höhe 57.2 mm) gefüllt. Der Konus wurde sofort nach dem Auffüllen vorsichtig angehoben. Danach wurde mittels Schublehre nach 90 Sekunden die Dimension des Zementkuchens bestimmt.
Für Versuche mit den erfindungsgemässen Polymeren **P-1** bis **P-10** wurde der Wasseranteil um 5% reduziert, d.h. 100 Gramm Portlandzement Typ I CEM 42.5 wurde mit 31.5 Gramm Wasser (W/Z Wert beträgt 0.315) und 0.5 Gramm einer 40%-igen wässrigen Emulsion mit dem erfindungsgemässen Polymere **P** (entspricht 0.2 Gramm Feststoff des Polymers) eine Minute gemischt und anschliessend in den Mini-Konus gefüllt.
Zum Vergleich wurde anstelle des erfindungsgemässen Polymers **P** ein herkömmliches Tensid (Texapon NSO von Cognis GmbH) beziehungsweise ein herkömmlicher Verflüssiger (Flube OS 39 der Firma Giovanni Bozzetto S.P.A, Italien) dazugegeben.

**Tabelle 5: Ausbreitmass (ABM) in mm nach 90 Sekunden**

| Polymer **P** bzw. Tensid oder Verflüssiger | Ausbreitmass (ABM) in mm 90 Sekunden |
|---|---|
| **P-1** | 101 |
| **P-2** | 122 |
| **P-3** | 89 |
| **P-4** | 106 |
| **P-5** | 143 |
| **P-6** | 60 |
| **P-7** | 113 |
| **P-8** | 130 |
| **P-9** | 105 |
| **P-10** | 90 |
| **Flube OS 39** | 110 |
| **Texapon NSO** | 40 |
| **ohne** | 40 |

Tabelle 5 zeigt, dass das erfindungsgemässe Polymer P auch ohne zusätzlichen Verflüssiger eine verflüssigende Wirkung zeigt und zu einem Ausbreitmass führt, welches mit herkömmlichen Verflüssigern vergleichbar ist. Herkömmliche Tenside hingegen zeigen keine verflüssigende Wirkung.

Selbstverständlich ist die Erfindung nicht auf die gezeigten und beschriebenen Ausführungsbeispiele beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung zu verlassen.

## Patentansprüche

1. Polymer **P** erhältlich durch Copolymerisation von
a) mindestens einem ethylenisch ungesättigten Monomer **A,** ausgewählt aus der Gruppe bestehend aus ungesättigten Mono-oder Dicarbonsäuren oder Analoga von ungesättigten Mono-oder Dicarbonsäuren, ungesättigten Sulfonsäuren oder Analoga von ungesättigten Sulfonsäuren, und ungesättigten Phosphonsäuren oder Analoga von ungesättigten Phosphonsäuren,
mit
b) mindestens einem ethylenisch ungesättigten Monomer **B** der Formel (I), (II) oder (III), 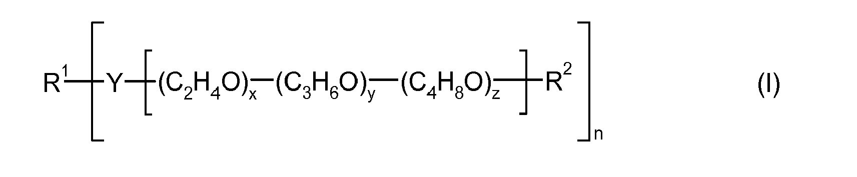 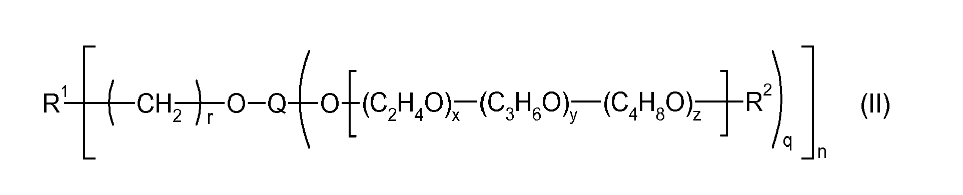 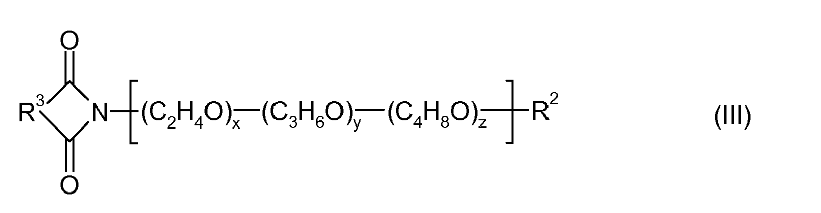 wobei R¹ unabhängig voneinander für unter (a) genannte Mono-oder Dicarbonsäuren nach Entfernung von n Carbonsäuregruppen steht, wobei R² unabhängig voneinander für H, Alkyl mit 1-20 Kohlenstoffatomen oder Alkylaryl mit 7-20 Kohlenstoffatomen steht, wobei R³ für unter (a) genannte Dicarbonsäuren nach Entfernung beider Carbonsäuregruppen steht,
wobei Y unabhängig voneinander für 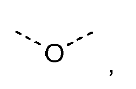 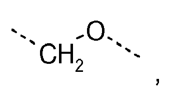 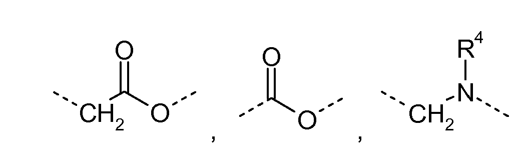 oder 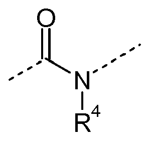 steht,
wobei R⁴ unabhängig voneinander für Alkyl mit 1-20 Kohlenstoffatomen, Alkylaryl mit 7-20 Kohlenstoffatomen oder H, vorzugsweise R⁴=H steht,
wobei n unabhängig voneinander für 1 oder 2 steht,
wobei r unabhängig voneinander den Wert 0 oder 1 aufweist,
wobei x, y, z unabhängig voneinander je die Werte 0 - 250 aufweisen und x+y+z = 3 oder grösser ist;
wobei Q für den Rest eines Polyalkohols der Formel Q(OH)_{q+1} nach Entfernung aller OH Gruppen steht,
wobei q für 2 bis 5, insbesondere 2 oder 3, steht,
und
c) mindestens einem ethylenisch ungesättigten Monomer **C** der Formel (IV), 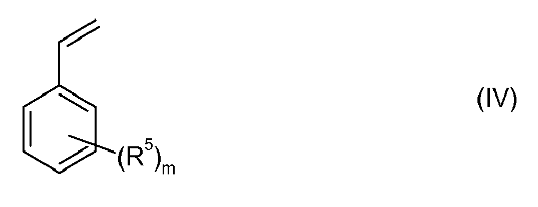 wobei R⁵ unabhägig voneinader für Alkyl mit 1-30 Kohlenstoffatomen, Alkoxy der Formel -OR⁶, Polyoxyalkyloxy der Formel -O-[(C₂H₄O)ₓ-(C₃H₆O)_{y}-(C₄H₈O)_{z}]-R², Cl, F, Br, oder NO₂ steht, wobei m für ein Zahl von 0 bis 5, vorzugsweise 0, steht,
wobei R⁶ unabhängig voneinander für Alkyl mit 1-30 Kohlenstoffatomen steht,
wobei x, y, z unabhängig voneinander je die Werte 0 - 250 aufweisen und x+y+z = 3 oder grösser ist;
wobei R² unabhängig voneinander für H, Alkyl mit 1-20 Kohlenstoffatomen oder Alkylaryl mit 7-20 Kohlenstoffatomen steht,
und
d) mindestens einem ethylenisch ungesättigten Monomer **D** der Formel (V), 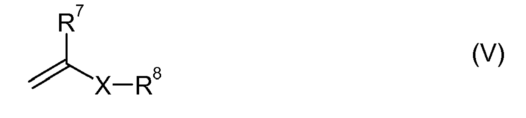 wobei R⁷ für H oder Methyl steht,
wobei R⁸ für einen linearen oder verzweigten Alkylrest mit 2-30 Kohlenstoffatomen, für Cycloalkyl oder Alkenyl mit 2-30 Kohlenstoffatomen, Alkylaryl oder Aralkyl mit 7-20 Kohlenstoffatomen, einen substituierten oder unsubstituierten Arylrest oder einen zweiwertigen Rest mit 2 bis 30 Kohlenstoffatomen steht, und wobei R⁸ gegebenenfalls, falls X 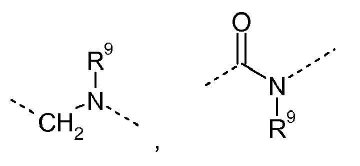 oder 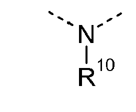 ist, mit R⁹ oder R¹⁰ und mit N einen Ring, insbesondere einen 5-er bis 8-er Ring, bildet, welcher gegebenenfalls aromatische Strukturen aufweist und gegebenenfalls im oder am Ring Heteroatome aufweist,
wobei X für 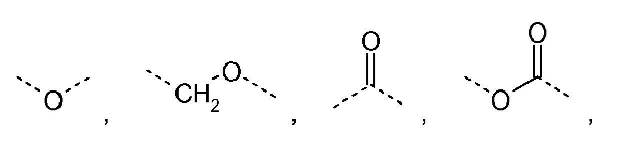 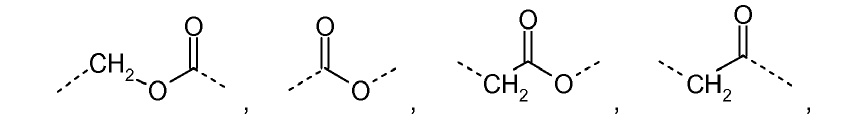 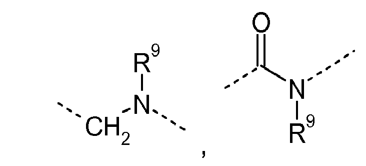 oder 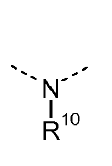 wobei R⁹ für Alkyl mit 1-20 Kohlenstoffatomen, Alkylaryl mit 7-20 Kohlenstoffatomen oder H, vorzugsweise R⁹=H, steht, und wobei R⁹ gegebenenfalls mit N und mit R⁸ einen Ring, insbesondere einen 5-er bis 8-er Ring, bildet und gegebenenfalls im oder am Ring Heteroatome aufweist,
wobei R¹⁰ für Alkyl mit 1-20 Kohlenstoffatomen, Alkylaryl mit 7-20 Kohlenstoffatomen oder Alkenyl mit 1 bis 20 Kohlenstoffatomen steht, und wobei R¹⁰ gegebenenfalls mit N und mit R⁸ einen Ring, insbesondere einen 5-er bis 8-er Ring, bildet und gegebenenfalls im oder am Ring Heteroatome aufweist;
und gegebenenfalls
e) mindestens einem basischen ethylenisch ungesättigten Monomer **E** der Formel (VI), 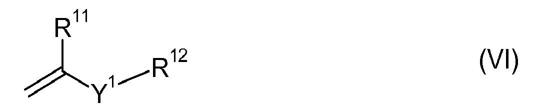 wobei R¹¹ für H oder Methyl steht,
wobei Y¹ für 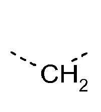 oder 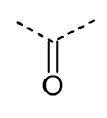 steht,
wobei R¹² für einen Rest mit mindestens einer primären, sekundären
oder tertiären Aminogruppe steht, falls Y¹ gleich 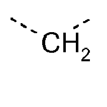 ist, und für
einen Rest mit mindestens einer sekundären oder tertiären
Aminogruppe, falls Y¹ gleich 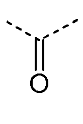 ist;
und gegebenenfalls
f) mindestens einem weiteren ethylenisch ungesättigten Monomer **W**.

2. Polymer **P** nach Anspruch 1, **dadurch gekennzeichnet, dass** das Monomer **A** die Formel (VII) aufweist, 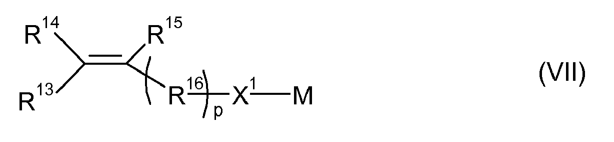 wobei X¹ für CO₂, SO₃ oder PO₃ steht,
wobei M für H, Alkalimetall, Halbalkalimetall, Ammonium oder Ammoniumkation steht, wobei R¹³ für H, CH₃, COOM oder CH₂COOM, insbesondere H, steht;
oder wobei R¹³ mit X einen Ring bildet zu -CO-O-CO-;
wobei R¹⁴ für H, ein Alkyl mit 1 bis 5 Kohlenstoffatomen, COOM oder CH₂COOM, insbesondere H, steht;
wobei R¹⁵ für H, CH₂COOM oder ein Alkyl mit 1 bis 5 Kohlenstoffatomen steht, insbesondere H oder CH₃;
wobei R¹⁶ unabhängig voneinander für eine Phenylengruppe oder eine lineare oder verzweigte Aklylengruppe mit 1 bis 20 Kohlenstoffatomen, welche gegebenenfalls funktionelle Gruppen mit Heteroatomen aufweisen, steht;
wobei p den Wert 0 oder 1 aufweist.

3. Polymer **P** nach einem der Ansprüche 1 oder 2, **dadurch gekennzeichnet, dass** das Analogon der ungesättigten Mono- oder Dicarbonsäure, Sulfonsäure oder Phosphonsäure ausgewählt ist aus der Gruppe bestehend aus Säuresalz, Säurehalogenid und Säureanhydrid.

4. Polymer **P** nach einem der vorhergehenden Ansprüche, **dadurch gekennzeichnet, dass** Monomer **A** (Meth)acrylsäure, Mesaconsäure, Citraconsäure, Glutactonsäure, Fumarsäure, Maleinsäure, Itaconsäure, Vinylbenzoesäure, Crotonsäure, Vinylsulfonsäure, Allylsulfonsäure, Methallylsulfonsäure, 2-Acrylamido-2-methylpropansulfonsäure oder Vinylphosphonsäure, vorzugsweise Acrylsäure oder Methacrylsäure, ist.

5. Polymer **P** nach einem der vorhergehenden Ansprüche, **dadurch gekennzeichnet, dass** die Copolymerisation in Gegenwart eines Radikalbildners stattfindet.

6. Polymer **P** nach einem der vorhergehenden Ansprüche, **dadurch gekennzeichnet, dass** das Monomer **B** ein Polyoxyalkylen-(meth)acrylsäureester oder ein Polyoxyalkylenvinylether oder Polyoxyalkylenallylether ist.

7. Polymer **P** nach einem der vorhergehenden Ansprüche, **dadurch gekennzeichnet, dass** das Monomer **C** Styrol ist.

8. Polymer **P** nach einem der vorhergehenden Ansprüche, **dadurch gekennzeichnet, dass** das Monomer **D** ein Vinylester einer Fettsäure mit 3 bis 30 Kohlenstoffatomen ist.

9. Polymer **P** nach einem der vorhergehenden Ansprüche, **dadurch gekennzeichnet, dass** das Monomer **E** Allylamin ist.

10. Polymer **P** nach einem der Ansprüche 1 bis 8, **dadurch gekennzeichnet, dass** das Monomer **E** durch Umsetzung von Allylglycidylether mit Ammoniak oder mindestens einem Amin hergestellt ist.

11. Polymer **P** nach einem der vorhergehenden Ansprüche, **dadurch gekennzeichnet, dass** die eingesetzte Menge der Monomere **A** 5-90 Mol-%, die von **B** 8-40 Mol-%, die von **C** 0.1-30 Mol-%, die von **D** 0.1-30 Mol-%, die von **E** 0-10 Mol-% und die von **W** 0-5 Mol-% beträgt, jeweils bezogen auf die Gesamtmolmenge der eingesetzten Monomere von **A**, **B, C, D, E** und **W** bei der Herstellung des Polymers **P**, und wobei das Molverhältnis der Monomere **A:B** ≤ 10:1 ist.

12. Polymer **P** nach Anspruch 11, **dadurch gekennzeichnet, dass** die eingesetzte Menge der Monomere **A** 30-70 Mol-%, die von **B** 10-20 Mol-%, die von **C** 10-20 Mol-%, die von **D** 6-10 Mol-%, die von **E** 0-7 Mol-%, und die von **W** 0-1 Mol-% beträgt, jeweils bezogen auf die Gesamtmolmenge der eingesetzten Monomere von **A, B, C, D, E** und **W** bei der Herstellung des Polymers **P**.

13. Polymer **P** nach Anspruch 12, **dadurch gekennzeichnet, dass** die eingesetzte Menge der Monomere **A** 55-65 Mol-%, die von **B** 12-18 Mol-%, die von **C** 12-18 Mol-%, die von **D** 7-9 Mol-%, die von **E** 0.1-2 Mol-%, und die von **W** 0-0.1 Mol-% beträgt, jeweils bezogen auf die Gesamtmolmenge der eingesetzten Monomere von **A, B, C, D, E** und **W** bei der Herstellung des Polymers **P**.

14. Polymer **P** nach einem der vorhergehenden Ansprüche, **dadurch gekennzeichnet, dass** das Verhältnis von **A:B** ≤ 8:1, vorzugsweise ≤ 3:1, ist.

15. Verwendung eines Polymers **P**, nach einem der Ansprüche 1 bis 14, als Verflüssiger für hydraulisch abbindende Zusammensetzungen, insbesondere Beton und Mörtel.

16. Verwendung eines Polymers **P**, nach einem der Ansprüche 1 bis 14, als Emulgator.

17. Zusammensetzung Z umfassend mindestens ein Polymer P nach einem der Ansprüche 1 bis 14 und mindestens einen Entschäumer M.

18. Zusammensetzung Z nach Anspruch 17, **dadurch gekennzeichnet, dass** das Verhältnis des Polymers P zum Entschäumer M 2:3 bis 49:1, insbesondere 3:2 bis 4:1, beträgt.

19. Zusammensetzung Z nach einem der Ansprüche 17 oder 18, **dadurch gekennzeichnet, dass** der Entschäumer M ein Phosphorsäureester, ein Polyalkylenglykol, eine Fettsäure, ein Fettsäureester oder ein Silikon ist.

20. Zusammensetzung Z nach einem der Ansprüche 17 bis 19, **dadurch gekennzeichnet, dass** die Zusammensetzung zusätzlich Wasser enthält.

21. Zusammensetzung Z nach Anspruch 20, **dadurch gekennzeichnet, dass** die Zusammensetzung zusätzlich mindestens einen Verflüssiger V für hydraulisch abbindende Zusammensetzungen umfasst.

22. Zusammensetzung Z nach Ansruch 21, **dadurch gekennzeichnet, dass** der Verflüssiger V ein Polycarboxylat ist.

23. Wässrige Zusammensetzung Z nach einem der Ansprüche 21 oder 22, **dadurch gekennzeichnet, dass** die Zusammensetzung Z 0.04 bis 10 Gewichts-%, insbesondere 0.05 bis 5 Gew.-%, an Polymer P, 0.01 bis 10 Gew.-%, insbesondere 0.05 bis 5 Gew.-% an Entschäumer M, und 3 bis 50 Gewichts-%, insbesondere 20 bis 40 Gew.-%, an Verflüssiger V, umfasst, bezogen auf das Gewicht der wässrigen Zusammensetzung Z.
